# EUROPEAN PATENT APPLICATION

(11) **EP 1 336 557 A2**
(43) Date of publication of application: **20.08.2003**
(21) Application number: 03001625.7
(22) Date of filing: 24.01.2003
(51) Int. Cl.: B62M 27/02

(54) **Snowmobile**

(30) Priority: 13.02.2002 JP 2002035508
(71) Applicant: YAMAHA HATSUDOKI KABUSHIKI KAISHA, Iwata-shi Shizuoka-ken (JP)
(72) Inventor: Takahiko, Kubota, Iwata-Shi, Shizuoka-ken (JP)
(74) Representative: Grünecker, Kinkeldey, Stockmair & Schwanhäusser Anwaltssozietät

(57) **Abstract**

The invention relates to a snowmobile comprising a body and a steering device. It aims to improve a steering device capable of effecting desired ski characteristics even if the snow quality or the number of crew members changes. This is achieved by a snowmobile having a steering device for a snowmobile comprising a steering ski having band plate-like ski body disposed at the front of a body frame for leftward and rightward steering movement and extending longitudinally of the vehicle, and a keel adapted to be protruded from the bottom of the ski body toward the snow surface, wherein between the ski body and the keel are provided keel protrusion adjusting mechanisms for adjusting the amount of protrusion of the keel.

## Description

The invention relates to a snowmobile comprising a body frame and a steering device adapted to control the running direction of the snowmobile by means of at least one steering ski having a band plate-like ski body disposed at the front of the body frame and extending longitudinally to the snowmobile.

In general, a snowmobile is arranged such that at the front of a body frame is mounted an engine and there disposed are a pair of left and right steering skis, and at the rear of the body frame is disposed a track belt, so that the track belt can be drivably rotated by the engine while the steering skis are turned leftward and rightward by a steering handle for the running of the snowmobile over snow.

In such steering skis of a snowmobile, a system has been adopted in which a band plate-like ski body is formed, integrally, with a keel section protruded from the bottom of the ski body toward the snow surface.

However, if a system is adopted in which a keel section is formed integral with the ski body, as in a conventional steering device, it is difficult to obtain sufficient ski characteristics because of changes in the snow quality or the number of crew members. For example, steering load of the steering handle increases depending on the snow quality, or ski action is worsened depending on the number of crew members

In view of the foregoing prior art, it is an object of this invention to improve a snowmobile of the known kind to be capable of effecting desired ski characteristics even if the snow quality or the number of crew members changes.

For a snowmobile of the above kind, this objective is solved in an inventive manner by a keel adapted to be protruded from the bottom of the ski body toward the snow surface, wherein the position of the keel is adjustable relative to the ski body.

According to a preferred embodiment, keel protrusion adjusting mechanisms for adjusting the amount of protrusion of the keel are provided between the ski body and the keel.

Preferably, the keel protrusion adjusting mechanisms are arranged such that the forward portion and the rearward portion of the keel with respect to a body support section thereof can be adjusted independently.

Thereby, according to one embodiment, the keel protrusion adjusting mechanisms are arranged such that adjusting screws are screwed in the ski body, the keel is engaged with the adjusting screws, and the adjusting screws are advanced and retracted so as to adjust the amount of protrusion of the keel.

Advantageously, dampers between the ski body and the keel are disposed for absorbing vibration and shocks from the snow surface.

Preferably, the keel is detachable from the ski body.

According to a further embodiment, the keel is formed integral with the ski body and/or elastically deformable so that adjustment of the elastic deformation of the keel allows adjustment of the amount of protrusion of the keel.

According to still another embodiment, lateral keel dimension adjusting mechanisms are provided between the ski body and the keel for adjusting the lateral dimension of the keel itself.

Additionally, the lateral keel dimension adjusting mechanisms may be arranged such that the forward portion and the rearward portion of the keel with respect to a body support section thereof can be adjusted independently.

Even more, keel position adjusting mechanisms are provided between the ski body and the keel for adjusting the lateral position of the keel.

Therein, the keel position adjusting mechanisms are arranged such that the forward portion and the rearward portion of the keel with respect to a body support section thereof can be adjusted independently.

Additionally, between the ski body and the keel are provided: keel protrusion adjusting mechanisms for adjusting an amount of protrusion of the keel and lateral keel; dimension adjusting mechanisms for adjusting the lateral dimension of the keel itself.

Preferably, between the ski body and the keel are provided: keel protrusion adjusting mechanisms for adjusting an amount of protrusion of the keel and keel; position adjusting mechanisms for adjusting the lateral position of the keel.

Further preferably, between the ski body and the keel are provided: keel protrusion adjusting mechanisms for adjusting an amount of protrusion of the keel; lateral keel dimension adjusting mechanisms for adjusting the lateral dimension of the keel itself; and keel position adjusting mechanisms for adjusting the lateral position of the keel.

In the steering device according to the invention, the position of the keel relative to the ski body is adjustable, so that the amount of protrusion of the keel, the lateral dimension of the keel itself or the lateral position of the keel can be adjusted in response to the snow quality or the number of crew members, effecting desired ski characteristics.

Accordingly, the amount of protrusion of the keel is adjustable, so that in the case where the snow quality is hard or the number of crew members is increased, operating load of the steering handle can be reduced if the amount of protrusion of the keel is decreased. In the case of fresh snow or deep snow, a larger keel protrusion allows a higher ski action, enhancing turning performance.

Since the keel protrusion adjusting mechanisms are arranged such that the forward portion and the rearward portion of the keel with respect to a body support section thereof can be adjusted independently, the keel protrusion can be changed separately for the forward portion and the rearward portion, and a further detailed setting of the ski characteristics can be provided.

For example, if the keel protrusion of the forward portion is larger than that of the rearward portion, the ski is allowed to get out from wheel tracks easily and to be prevented from being caught in the wheel tracks. On the contrary, if the keel protrusion of the rearward portion is larger than that of the forward portion, stability during straight ahead running can be improved further.

Preferably, the adjusting screws screwed in the ski body are advanced and retracted so as to adjust the amount of protrusion of the keel, so that adjustment of the keel protrusion can be effected with a simple structure and at a low cost.

Further preferably, between the ski body and the keel are provided dampers, so that vibration and shocks from the snow surface during running can be prevented from being transmitted to a rider. That is, in the case of a conventional integrated steering ski, the ski body or the keel follows wheel tracks on the snow surface easily, and some times the whole vehicle body can be jolted. In addition, vibration of relatively high frequency generated during running on ice or a hard snow surface is easily transmitted to a rider, resulting in a possible unpleasant feeling of the rider. Consequently, such jolting due to wheel tracks can be mitigated, and an unpleasant vibration during running on ice or the like can be dampened.

According to a preferred embodiment, the keel is detachable from the ski body, so that if the keel is worn down or damaged, it is possibly to replace only the keel at a low price compared with the conventional case where the whole steering ski is to be replaced.

Since the keel is formed integral with the ski body and elastically deformable, adjustment of keel protrusion can be effected with a very simple structure.

According to a further preferred embodiment, between the ski body and the keel are provided lateral keel dimension adjusting mechanisms for adjusting the lateral dimension of the keel itself, so that surface pressure to the snow surface can be changed if the lateral keel dimension is adjusted in response to changes in the snow quality or the like, and the controllability or stability can be enhanced. If for example, the lateral keel dimension is enlarged, surface pressure to the snow surface is decreased, operating load of the steering handle is reduced, and controllability is improved, and on the contrary, if for example, the lateral keel dimension is reduced, the surface pressure is increased, and that the running stability is improved.

Thereby, the lateral keel dimension adjusting mechanisms are arranged such that the forward portion and the rearward portion of the keel can be adjusted independently, so that the lateral dimension of the keel itself can be changed separately for the forward portion and the rearward portion, and a detailed setting of the surface pressure to the snow surface can be provided.

Moreover, between the ski body and the keel are provided keel position adjusting mechanisms for changing the lateral position of the keel, so that the distance between left and right keels can be adjusted in response to the snow quality or the like, and the desired ski characteristics can be effected.

Further, since the keel position adjusting mechanisms are arranged such that the forward portion and the rearward portion of the keel can be adjusted independently, the distance between left and right keels can be changed separately for the forward portion and the rearward portion, a further detailed setting of the ski characteristics can be provided.

Additionally, keel protrusion adjusting mechanisms for adjusting an amount of keel protrusion and lateral keel dimension adjusting mechanisms for adjusting the lateral dimension of the keel itself are provided, so that both of the amount of keel protrusion and the lateral keel dimension can be changed in response to the snow quality or the number of crew members, and detailed ski characteristics can be effected.

According to still another embodiment, keel protrusion adjusting mechanisms for adjusting an amount of keel protrusion and keel position adjusting mechanisms for adjusting a lateral position of the keel are provided, so that both of the amount of keel protrusion and the distance between left and right keels can be changed in response to the snow quality or the number of crew members, and the detailed ski characteristics can be effected.

Since keel protrusion adjusting mechanisms for adjusting an amount of keel protrusion, lateral keel dimension adjusting mechanisms for adjusting a lateral dimension of the keel itself, and/or keel position adjusting mechanisms for adjusting the distance between left and right keels are provided, the amount of keel protrusion, the lateral keel dimension and/or the distance between left and right keels can be changed in response to the snow quality or the number of crew members, and a further detailed setting of the ski characteristics can be provided.

In the following, preferred embodiments of this invention will be described with reference to the accompanying drawings, wherein:

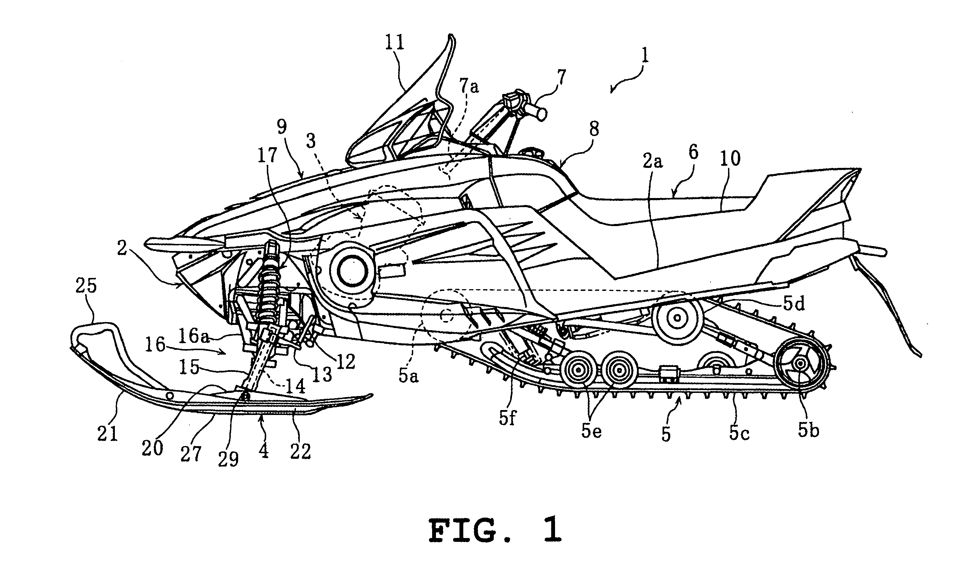

- Fig. 1: is a side view of a snowmobile provided with a steering device according to an embodiment of the invention of claims 1-6;

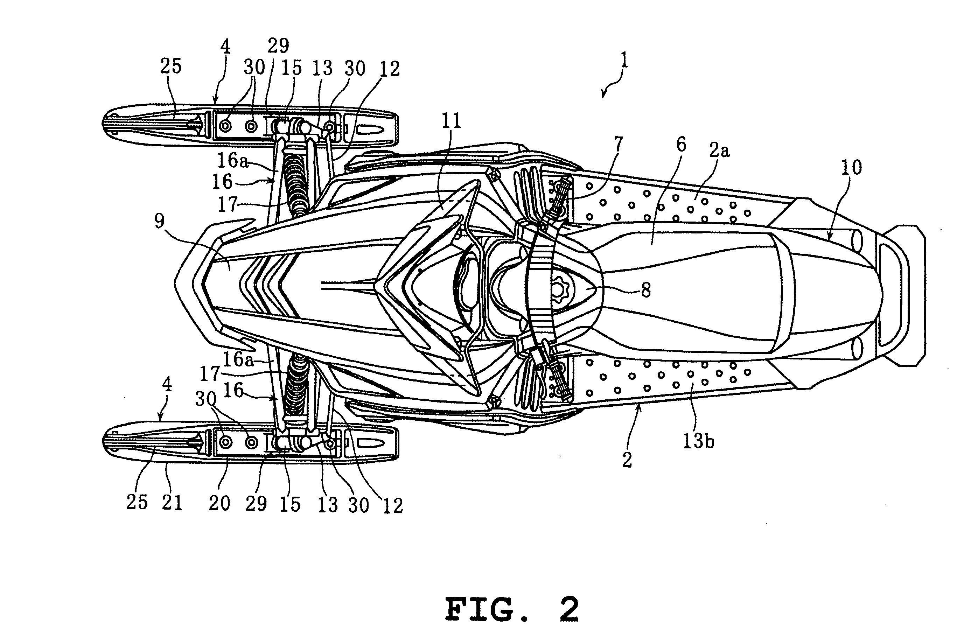

- Fig. 2: is a plan view of the snowmobile;

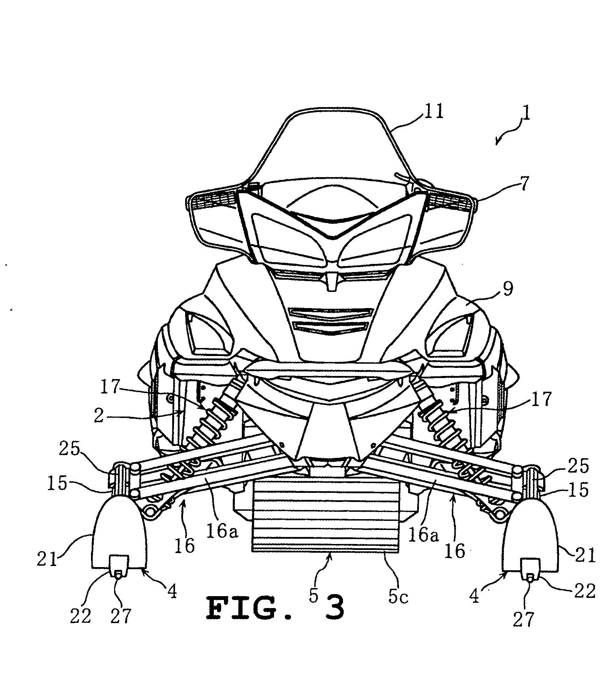

- Fig. 3: is a front view of the snowmobile;

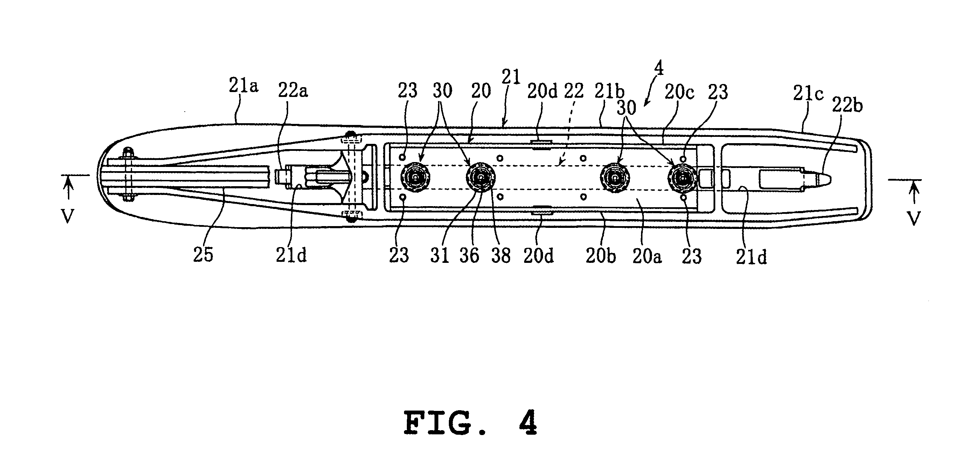

- Fig. 4: is a plan view of a steering ski of the steering device;
- Fig. 5: is a sectional side view (sectional view taken along the line V-V of Fig. 4) of the steering ski;

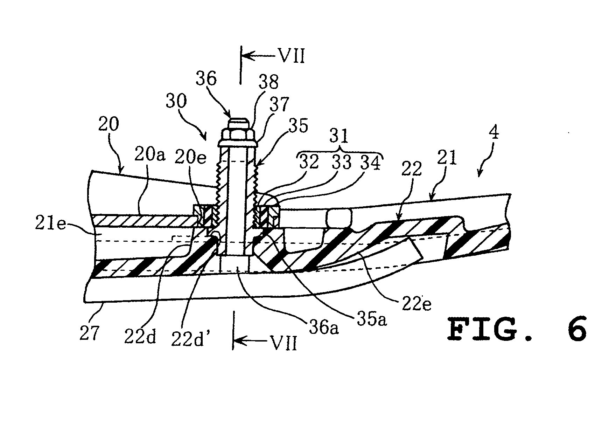

- Fig. 6: is a sectional side view of a keel protrusion adjusting mechanism of the steering device;
- Fig. 7: is a sectional rear view (sectional view taken along the line VII-VII of Fig. 6) of the keel protrusion adjusting mechanism;
- Fig. 8: is a sectional side view showing one adjustment pattern by the keel protrusion adjusting mechanism;

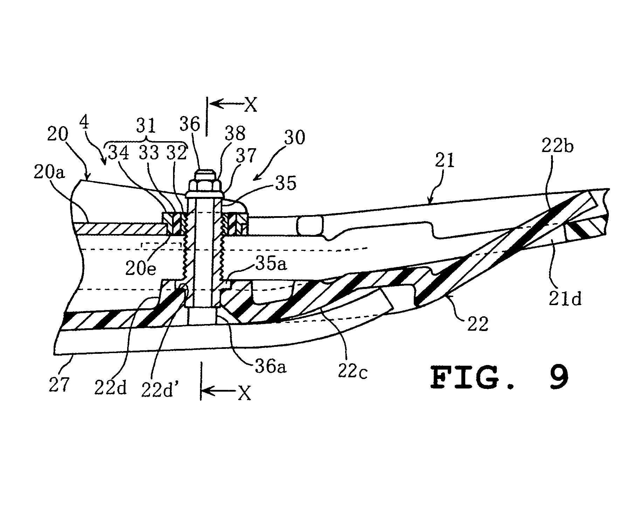

- Fig. 9: is a sectional side view of the keel protrusion adjusting mechanism;

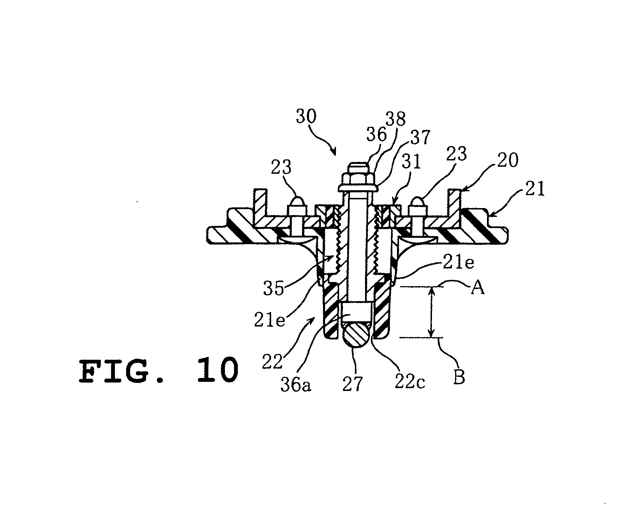

- Fig. 10: is a sectional rear view (sectional view taken along the line X-X of Fig. 9) of the keel protrusion adjusting mechanism;
- Fig. 11: is a sectional side view showing another adjustment pattern;
- Fig. 12: is a sectional side view showing still another adjustment pattern; and
- Fig. 13: is a sectional view of explaining a steering device according to an embodiment of the invention of claims 8 and 9.

In the figures, numeral 1 designates a snowmobile, having a general structure in which at the front of a body frame 2 is mounted an engine 3 and there disposed are a pair of left and right steering skis 4, 4; at the rear of the body frame are disposed a drive track 5 on the lower side, and a fuel tank 8 and a saddle type seat 6 on the upper side; and in front of and above the fuel tank 8 is disposed a steering handle 7.

At the left and the right side of and the lower side of the seat 6 of the body frame 2 are formed foot rests 2a, 2a. The front section of the body frame 2 is surrounded by a front cover 9, and the lower portion of the seat 6 is surrounded by a rear cover 10. On the front cover 9 and in front of the steering handle 7 is disposed a wind shield 11 for blocking the running wind.

The snowmobile 1 can be driven over snow by the arrangement such that while the engine 3 drivingly rotates the drive track 5, the steering skis 4, 4 are turned leftward and rightward by the steering handle 7.

The drive track 5 is made up of a front pulley 5a, a rear pulley 5b, and a wide endless track belt 5c wound around the front and rear pulleys, having the shape of approximately a parallelogram in profile. The drive track 5 is supported through a rear suspension 5f for up and down swinging movement about a drive shaft (not shown) of the front pulley 5a. Numerals 5d, 5e designate guide pulleys for holding the track belt 5c in the shape of a parallelogram.

Each of the left and right steering skis 4 is supported on the body frame 2 through a suspension mechanism 16 for up and down swinging movement. The suspension mechanism 16 is arranged such that the outer end of a link member 16a is connected to an outer cylinder 15 supporting the steering ski 4 for left and right turning movement and the inner end of the link member 16a to the body frame 2, and between the outer cylinder 15 and the body frame 2 is mounted a shock absorber 17. Thus, the left and right steering skis 4 are each suspended independently.

The left and right steering skis 4 are connected to the steering handle 7 through a steering mechanism. The steering mechanism is arranged such that the lower end of a steering shaft 7a having the steering handle 7 fixed thereto is connected to one end of an L-shaped link arm (not shown) through a steering rod (not shown), and left and right tie rods 12, 12 to the other end of the link arm; to the outer ends of the left and right tie rods 12, 12 are connected knuckle arms 13, 13; and further, to the left and right knuckle arms 13, 13 are connected knuckle steerings 14, 14 connected to the steering skis 4.

The left and right knuckle steerings 14 are inserted into and supported by the outer cylinders 15. At the lower end of each knuckle steering 14 is supported the steering ski 4 for up and down swinging movement, and to the upper end is fastened the knuckle arm 13. If the steering handle 7 is turned leftward or rightward, the tie rods 12 rotate the knuckle arms 13 through the steering shaft 7a, causing the left and right steering skis 4 to be rotated in the same direction.

The steering ski 4 comprises a band plate-like plastic ski body 21 to which is fixed a saddle 20 made of an aluminum alloy, and a plastic keel 22 adapted to be protruded from the bottom of the ski body 21 toward the snow surface.

The ski body 21 and the keel 22 are separated from each other, for adjusting of the amount of protrusion of the keel 22 from the ski body 21. The ski body and the keel are not necessarily separated, but the saddle may be made of plastic, or further may be formed integral with the ski body.

The saddle 20 is configured in an upwardly opening channel-like shape in cross-section such that on the left and right edges of the longitudinally extending band plate-like saddle body 20a are provided left and right side walls 20b, 20c integrally. The left and right side walls 20b, 20c are raised in the longitudinal middle portion, at which are formed boss sections 20d, 20d, and the knuckle steering 14 is supported by a support shaft 29 mounted to the left and right boss sections 20d, 20d therethrough. The saddle body 20a of the saddle 20 is fastened to the ski body 21 with a plurality of rivets 23.

The ski body 21 is formed such that its front section 21a is curved upwardly to a large extent, its middle section 21b extends approximately horizontally, and its rear section 21c is curved upwardly to some extent, when viewed from the side. A grip 25 is fastened to the front section 21 a so that gripping of the grip 25 allows a change of the direction of the steering ski 4 or the vehicle body.

The keel 22 has the shape of a thick plate formed extending substantially along the ski body 21. In the bottom of the keel 22 is formed a recessed groove 22c running longitudinally, and in the recessed groove 22c is disposed a runner 27 made from an iron rod. In the longitudinal middle of the runner 27 is fixed a carbide tip 28 for preventing sideslip during running on ice or the like.

The ski body 21 is formed with an opening 21d large enough for the keel 22 to be inserted. In this opening 21d is disposed the keel 22 for up and down advancing and retracting movement, and front and rear ends 22a, 22b of the keel 22 are engaged with the upper surfaces of the front and rear edges of the opening 21d of the ski body 21.

The keel 22 is supported on the ski body 21 through keel protrusion adjusting mechanisms 30 for adjusting the amount of protrusion of the keel 22. The keel protrusion adjusting mechanisms 30 are disposed on the front side and the rear side of the ski body 21 from its boss section (body support section) 20d, two sets for each side, and the structure of which is described below in detail.

At portions of the keel 22 corresponding to the keel protrusion adjusting mechanisms 30 are formed boss sections 22d, of approximately cylindrical shape, spaced at given intervals and protruding upwardly. The boss sections 22d are located within the opening 21d of the ski body 21 and adapted to be in abutment against the bottom of the saddle body 20a. At the left and right opening edges of the opening 21d of the ski body 21 are formed downwardly extending guide sections 21e,21e, and the boss sections 22d are supported by the left and right guide sections 21e for up and down movement.

At portions of the saddle body 20a facing the boss sections 22d are formed circular support holes 20e. In each support hole 20e is fitted a bush 31. The bush 31 is made up of an inner cylinder 32 with a female thread formed in the inside circumferential surface, a rubber member 33 disposed surrounding the inner cylinder as a damper, and an outer cylinder 34 bonded to the rubber member, and the outer cylinder 34 is fitted fixedly in the support hole 20e at the opening edge.

In the inner cylinder 32 is fitted an approximately cylindrical adjusting screw 35 with a male thread on the outside circumferential surface. The adjusting screw 35 is formed, at the lower end, with an annular projection 35a integrally, and the annular projection 35a is seated, for rotation, against a shoulder 22d' formed in the inside wall of the boss section 22d.

In addition, the adjusting screw 35 is formed, at the upper end, with a tool mounting section 35b, which is shaped in a way such that the upper end of the outside circumferential portion of the adjusting screw is cut off circumferentially. The keel 22 is adapted to be advanced and retracted vertically, together with the adjusting screw 35 if a tool mounted on the tool mounting section 35b is rotated.

In the adjusting screw 35 is inserted a fixing bolt 36 with a slight clearance between them. The lower end 36a of the fixing bolt 36, which is formed to be a long diameter section, is fixed to the runner 27 by welding or the like, and an upper shoulder of the lower end 36a is in abutment against the bottom surface of the adjusting screw 35.

The upper end of the fixing bolt 36 is protruded from the upper end of the adjusting screw 35, and on the protruded portion is fitted a fixing nut 38 with a washer 37 therebetween. Tightening the fixing nut 38 causes the adjusting screw 35 to be locked in the state of non-rotation, and loosening the nut causes the locking state to be removed, allowing the adjusting screw to be rotatable. The rotation prevention device of the adjusting screw 35 is not limited to the fixing nut 38, but a circlip or the like may be used.

Now, the function and the effect of the snowmobile will be explained.

In adjusting the amount of protrusion of the keel 22, the fixing nuts 38 are loosened and the adjusting screws 35 are driven in and out by a tool. This allows the keel 22 and the runner 27 to be advanced and retracted between a minimum protruded position A and a maximum protruded position B, and thus they are adjusted to a desired amount of protrusion in response to the snow quality, the number of crew members, or a rider's preference. Thereafter, the fixing nuts 38 are tightened to lock the adjusting screws 35.

When the keel 22 is replaced, the fixing nuts 38 and washers 37 are removed from the fixing bolts 36, and in this condition, the runner 27 is first removed downwardly together with the fixing bolts 36, then the keel 22 is removed downwardly. Thus, the keel 22, runner 27 and fixing bolts 36 are removed from the ski body 21.

It is possible that the method of adjusting the amount of protrusion of the keel 22 includes various patterns such as a pattern in which the amount of protrusion of the whole keel is changed uniform, a pattern in which the protrusion of the keel is made larger on the front side than on the rear side, and a pattern in which the protrusion of the keel is made larger on the rear side than on the front side, or a pattern of the combination of these patterns, and an appropriate pattern will be selected in response to the snow quality, the number of crew members, or a rider's preference.

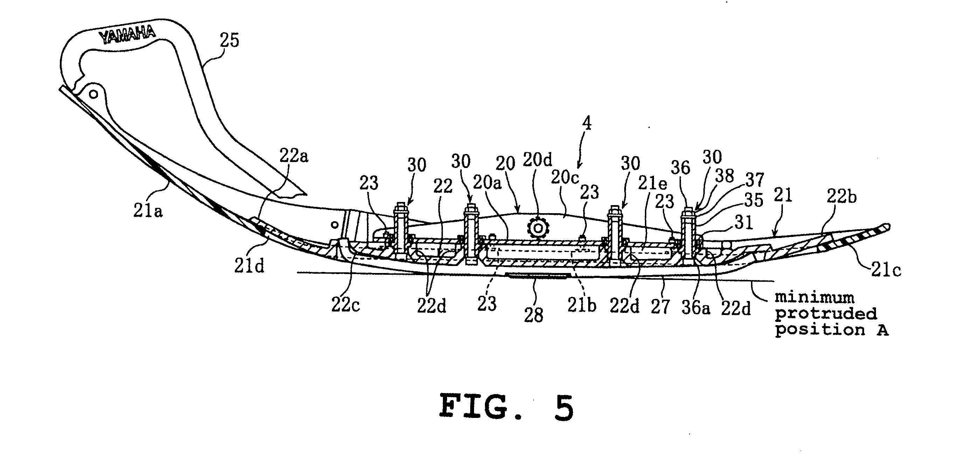

For example, in the case of touring running by two crew members on hard snow, the keel 22 is set to the side of the minimum protruded position A to decrease the keel protrusion (see Fig. 5). This allows a smaller handle load, enhancing running stability. That is, in the case of two crew members, ski load increases, so that handle load is increased, and in the case of touring running, handle operation should be performed for a long time. Therefore, it is effective to reduce ski action to a degree as small as possible for the reduction of operating force.

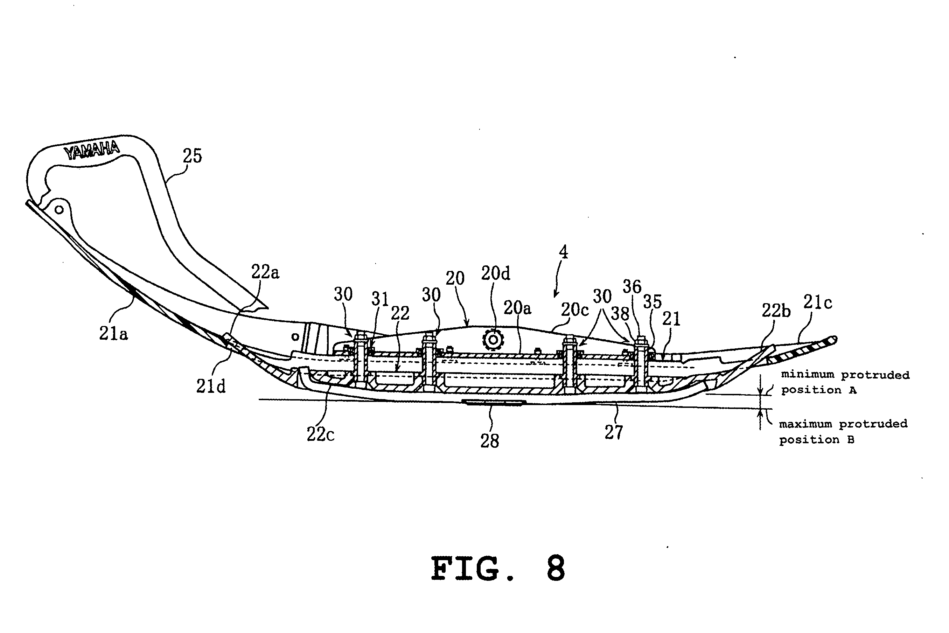

On the other hand, in the case of powdery fresh snow or deep snow, or an aggressive running, the keel 22 is set to the side of the maximum protruded position B to increase the keel protrusion (see Fig. 8). Thus, the ski action is improved, enhancing running performance and turning performance. In addition, a larger keel protrusion allows a turning or a snaking running without large speed drop during a race or the like.

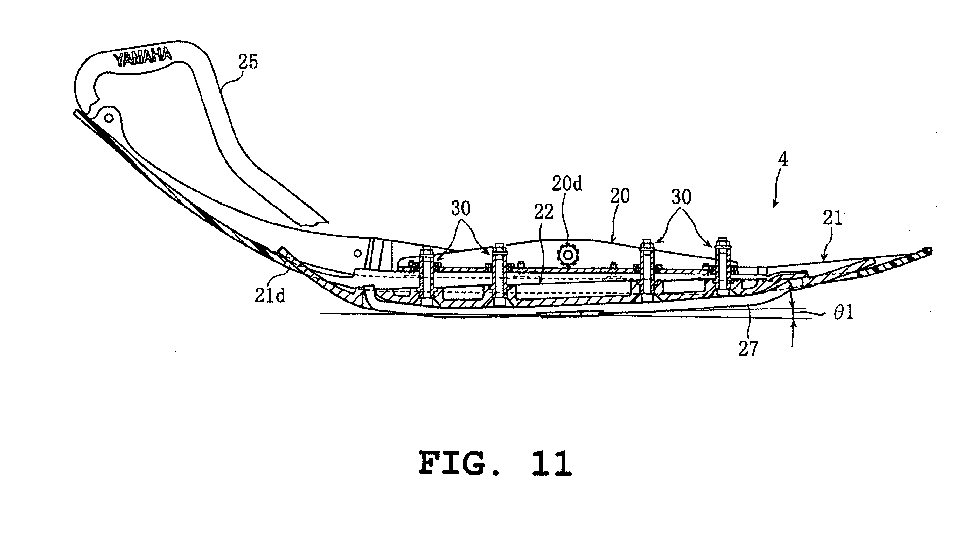

Further, in the case of running in wheel tracks on the snow surface, if the forward portion of the keel 22 with respect to the body support section is set to the side of the maximum protruded position B and the rearward portion to the side of the minimum protruded position A, the amount of protrusion of the forward portion of the keel 22 is made larger than that of the rearward portion (see θ1 of Fig. 11). This allows the vehicle to get out from wheel tracks easily and to be prevented from being caught in the wheel tracks, securing running stability.

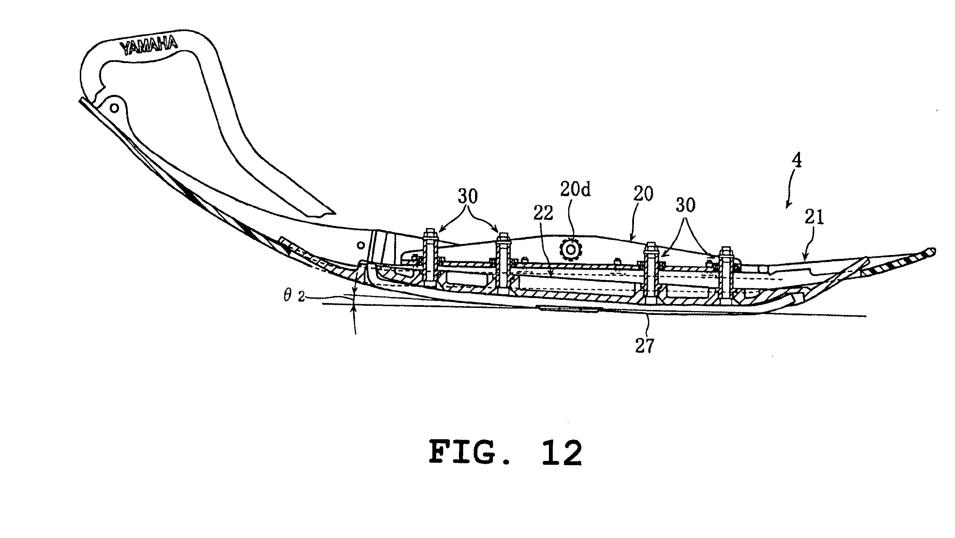

Furthermore, in the case where stability during straight ahead running is intended to be increased, if the forward portion of the keel 22 with respect to the body support section is set to the side of the minimum protruded position A, and the rearward portion to the side of the maximum protruded position B, the amount of protrusion of the rearward portion is made larger than that of the forward portion (see θ2 of Fig. 12). This secures stability during high speed running.

In this embodiment as described above, the ski body 21 and the keel 22 can be separated from each other, and between the ski body 21 and the keel 22 are provided keel protrusion adjusting mechanisms 30 for adjusting the amount of protrusion of the keel 22. Therefore, desired ski characteristics can be obtained by changing the amount of protrusion of the keel 22 in response to the snow quality or the number of crew members, which provides a stable running, and handle operating force can be reduced, which enhances controllability.

In addition, the keel protrusion adjusting mechanisms 30 are dispose on the front side and the rear side from the boss section 20d as a body support section of the steering ski 4, two sets for each side, so that the protrusion of the keel 22 can be changed separately for the front side and the rear side, providing detailed setting of the ski characteristics and improving the degree of freedom of the keel shape designing.

In this embodiment, an adjusting screw 35 is fitted in the bush 31 mounted on the saddle 20 of the ski body 21, the annular projection 35a of the adjusting screw 35 is seated against the shoulder 22d of the keel 22, and the adjusting screw 35 is advanced and retracted so as to change the amount of protrusion of the keel 22, so that the keel protrusion adjusting mechanism 30 can be formed with a simple structure and at a low cost.

Further, a fixing bolt 36 is inserted in the adjusting screw 35, and on the fixing bolt 36 is fitted a fixing nut 38 through a washer 37, so that the adjusting screw 35 can be locked at any position with a simple structure.

In this embodiment, the bush 31 is made up of an inner cylinder 32 with an adjusting screw 35 fitted therein, a rubber member 33 disposed surrounding the inner cylinder as a damper, and an outer cylinder 34 bonded to the rubber member, and the outer cylinder 34 is fixed to the saddle 20, so that the keel 22 can be elastically supported for back-and-forth and leftward and rightward swinging movement, thereby preventing unpleasant vibration and shocks from the snow surface from being transmitted to a rider during running. By the way, if the ski body and the keel section are integrated as in the conventional device, the whole vehicle body can be jolted due to wheel tracks on the snow surface, or vibration of high frequency can be transmitted to a rider during running on ice or a hard snow surface.

Further, in this embodiment, the keel 22 is detachable from the ski body 21, so that if the keel 22 is worn down or damaged, it is possible to replace only the keel 22 at a low price compared with the conventional case where the whole steering ski is replaced.

Although the foregoing embodiment is exemplified by a runner 27 being advanced and retracted together with the keel 22 in one body, this invention may be arranged such that the protrusion of either the keel or the runner is changed, or that the keel and the runner are advanced and retracted separately. For example, if protrusion of only the runner is changed, action of the ski edges can be increased during running on ice or a hard snow surface.

Although in the foregoing embodiment, the keel 22 is separated from the ski body 21, this invention may be arranged such that the keel is formed integral with the ski body and elastically deformable, and the elastic deformation of the keel is adjustable, whereby the protrusion of the keel is adjusted. Thereby, the structure can be simplified further.

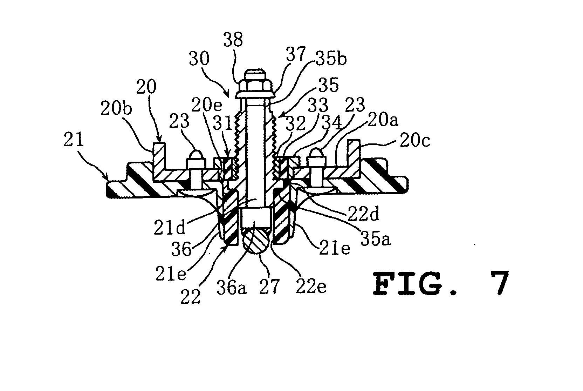

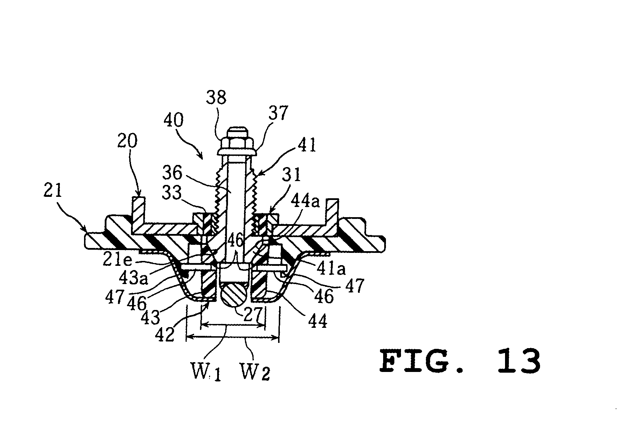

Fig. 13 is a view of explaining a steering device according to a further embodiment, and in the drawing, like numerals (as in Fig. 7) designate similar or corresponding elements.

This embodiment shows an arrangement in which lateral keel dimension adjusting mechanisms 40 are provided for adjusting the lateral dimension of the keel 42 itself. The lateral keel dimension adjusting mechanisms 40 are disposed on the front side and the rear side of the ski body 21 from its body support section, a plurality of sets for each side independently, and each mechanism is arranged such that in the saddle 20 fixed to the ski body 21 is screwed an adjusting screw 41 through a bush 31 for advancing and retracting movement, and in the adjusting screw 41 is inserted a fixing bolt 36. The fundamental structure of the mechanism is approximately the same as in the foregoing embodiment.

The adjusting screw 41 is formed, at the bottom, with a tapered section 41a of trapezoidal shape in cross-section. The keel 42 is made up of longitudinally extending left and right keel sections 43, 44 formed elastically deformable or movable in the lateral direction. The left and right keel sections 43, 44 are supported on the ski body 21 for expansion and contraction of the lateral dimension of the keel 42 by metal pins 46, 46, fixed to a guide section 21e of the ski body 21, being inserted into support holes 46, 46 formed in keel sections 43, 44. To the ski body 21 is attached a flexible cover 47 for preventing ingress of snow into the space between the guide section 21e and the left and right keel sections 43, 44. This cover may be formed integral with the ski body.

The left and right keel sections 43, 44 are formed, at their portions corresponding to the adjusting bolt 41, with tapered surfaces 43a, 44a for receiving the tapered section 41a. This adjusting bolt 41 is tightened and loosened so as to adjust the lateral dimension defined by the left and right keel sections 43, 44, between a minimum width W1 and a maximum width W2.

In this embodiment, lateral keel dimension adjusting mechanisms 40 are provided for adjusting the lateral dimension defined by the left and right keel sections 43, 44, so that if the lateral dimension defined by the left and right keel sections 43, 44 are adjusted between the minimum width W1 and the maximum width W2 in response to changes in the snow quality or the like, surface pressure to the snow surface can be changed, and the controllability and running stability can be enhanced. For example, if the lateral keel dimension is set to a value on the side of the maximum width, surface pressure to the snow surface is decreased, so that handle operating load can be reduced, and controllability is improved. If the lateral keel dimension is set to a value on the side of the minimum width, surface pressure to the snow surface can be increased, and running stability is improved.

Further, the lateral keel dimension adjusting mechanisms 40 are disposed in the forward and the rearward portion of the keel 41 independently, so that the lateral keel dimension can be changed separately for the front side and the rear side, and the detailed setting of the surface pressure to the snow surface can be provided.

Although in this embodiment, only the lateral keel dimension adjusting mechanisms are provided, the snowmobile may provide both of the lateral keel dimension adjusting mechanisms 40 and the forgoing keel protrusion adjusting mechanisms. In this case, detailed ski characteristics can be obtained in response to the snow quality or the number of crew members.

Although the foregoing embodiments are exemplified by an arrangement in which the amount of protrusion of the keel 22 from the ski body 21, and the lateral dimension of the keel itself are changed, keel position adjusting mechanisms for changing the lateral position of the keel relative to the ski body may be provided, too. In this case, the distance between left and right keels can be changed in response to the snow quality or the like, effecting desired ski characteristics as well.

Further, the keel position adjusting mechanisms may be disposed on the front side and the rear side of the keel from its body support section, independently for each side. In this case, the distance between the left and right keels can be changed separately for the front side and the rear side, and the detailed setting of the ski characteristics can be provided.

Both of the keel protrusion adjusting mechanisms and the keel position adjusting mechanisms may be provided. Further, all of the foregoing keel protrusion adjusting mechanisms, lateral keel dimension adjusting mechanisms and keel position adjusting mechanisms may be provided. In this case, more detailed ski characteristics can be obtained in response to the snow quality or the number of crew members.

To provide a steering device for a snowmobile capable of effecting desired ski characteristics even if the snow quality or the number of crew members changes, a snowmobile is proposed, comprising a steering device comprising a steering ski having band plate-like ski body disposed at the front of a body frame for leftward and rightward steering movement and extending longitudinally of the vehicle, and a keel adapted to be protruded from the bottom of the ski body toward the snow surface, wherein between the ski body and the keel are provided keel protrusion adjusting mechanisms for adjusting the amount of protrusion of the keel.

## Claims

1. Snowmobile (1) comprising a body frame (2) and a steering device adapted to control the running direction of the snow mobile (1) by means of at least one steering ski (4) having a band plate-like ski body (21) disposed at the front of the body frame (2) and extending longitudinally to the snow mobile (1),
**characterized by**
a keel (22,42) adapted to be protruded from the bottom of the ski body (21) toward the snow surface, wherein the position of the keel (22,42) is adjustable relative to the ski body (21).

2. Snowmobile according to claim 1, **characterized in that** a number of keel protrusion adjusting mechanisms (30) for adjusting the amount of protrusion of the keel (22,42) are provided between the ski body (21) and the keel (22,42).

3. Snowmobile according to claim 2, **characterized in that** a forward portion (22a) and a rearward portion (22b) of the keel (22,42) are adjustable independently with respect to a body support section (20d) by the keel protrusion adjusting mechanisms (30).

4. Snowmobile according to claim 2 or 3, **characterized in that** the keel protrusion adjusting mechanisms (30) comprise adjusting screws (35) being screwed in the ski body (21), **in that** the keel (22,42) is engaged with the adjusting screws (35), and **in that** the adjusting screws are advanceable and retractable to thereby adjust an amount of protrusion of the keel (22,42).

5. Snowmobile according to one of the claims 2 to 4, **characterized in that** dampers (33) are disposed between the ski body (21) and the keel (22,42) for absorbing vibration and shocks from a snow surface.

6. Snowmobile according to one of the claims 2 to 5, **characterized in that** the keel (22,42) is detachable from the ski body (21).

7. Snowmobile according to one of the claims 2 to 5, **characterized in that** the keel (22,42) is formed integrally with the ski body (21) and/or elastically deformable, wherein an adjustment of the elastic deformation of the keel (22,42) allows adjustment of the amount of protrusion of the keel (22,42).

8. Snowmobile according to one of the claims 1 to 7, **characterized in that** lateral keel dimension adjusting mechanisms (40) are provided between the ski body and the keel for adjusting the lateral dimension of the keel (22,42) itself.

9. Snowmobile according to claim 8, **characterized in that** a forward portion (22a) and a rearward portion (22b) of the keel (22,42) can be adjusted independently with respect to a body support section (20d) thereof by the lateral keel dimension adjusting mechanisms (40).

10. Snowmobile according to one of the claims 1 to 9, **characterized in that** keel position adjusting mechanisms for adjusting the lateral position of the keel are provided between the ski body (21) and the keel (22,42).

11. Snowmobile according to claim 10, **characterized in that** the forward portion (22a) and the rearward portion (22b) of the keel (22,42) can be adjusted independently with respect to a body support section (20d) thereof by the keel position adjusting mechanisms.

12. Snowmobile according to one of the claims 1 to 11, **characterized in that** keel protrusion adjusting mechanisms (30) for adjusting an amount of protrusion of the keel (22,42) and lateral keel dimension adjusting mechanisms (40) for adjusting the lateral dimension of the keel (22,42) itself are provided between the ski body (21) and the keel (22,42).

13. Snowmobile according to one of the claims 1 to 12, **characterized in that** keel protrusion adjusting mechanisms (30) for adjusting an amount of protrusion of the keel (22,42) and keel position adjusting mechanisms for adjusting the lateral position of the keel (22,42) are provided between the ski body (21) and the keel (22,42).

14. Snowmobile according to one of the claims 1 to 13, **characterized in that** keel protrusion adjusting mechanisms (30) for adjusting an amount of protrusion of the keel (22,42), lateral keel dimension adjusting mechanisms (40) for adjusting the lateral dimension of the keel (22,42) itself, and keel position adjusting mechanisms for adjusting the lateral position of the keel are provided between the ski body (21) and the keel (22,42).
